# EUROPEAN PATENT SPECIFICATION

(11) **EP 3 742 907 B1**
(45) Date of publication and mention of the grant of the patent: **20.08.2025**
(21) Application number: 19700840.2
(22) Date of filing: 23.01.2019
(51) Int. Cl.: A23L 23/10, A23P 10/28, A23L 29/212, A23L 33/10

(54) **PROCESS FOR PREPARING A BOUILLON TABLET**
VERFAHREN ZUR HERSTELLUNG EINES SUPPENWÜRFELS
PROCÉDÉ DE PRÉPARATION D'UN CUBE DE BOUILLON

(30) Priority: 24.01.2018 EP 18153112
(43) Date of publication of application: 02.12.2020
(73) Proprietor: Société des Produits Nestlé S.A., 1800 Vevey (CH)
(72) Inventor: MAHIEUX, Julien Philippe Nicolas, 45140 Ormes (FR); FORNY, Laurent, 1000 Lausanne 26 (CH); BOBE, Ulrich, 78247 Hilzingen (DE); KEHLENBECK, Volker, 78351 Bodman-Ludwigshafen (DE); BOZON, Annabel, Sheffield S10 2QA (GB); KRAUCH, Jose Guillermo, 78224 Singen (DE)
(74) Representative: Slaven, John William
(86) International application number: PCT/EP2019/051612
(87) International publication number: WO 2019/145353

(56) References cited:
- EP-A1- 2 651 240
- WO-A1-2004/049831
- WO-A1-2009/068378
- ANONYMOS: "Water content of Foods (7) [Starch, Protein]", KEM APPLICATION NOTE (KYOTO ELECTRONICS MANUFACTURING), 20 May 2008 (2008-05-20), pages 1 - 4, XP055462026, Retrieved from the Internet <URL:http://www.kyoto-kem.com/en/pdf/industry/Food/EKVX-01517.pdf> [retrieved on 20180322]

## Description

### Field of the Invention

The present invention relates to a process for preparing a bouillon tablet. The process comprises mixing an ingredient composition comprising crystalline ingredients, hygroscopic amorphous ingredients, humid native starch and less than 10 % fat, pressing the ingredient composition into a tablet and packaging the tablet.

### Background of the Invention

A bouillon tablet formed by compressing ingredients into a tablet shape, for example a cube, is widely used as a concentrate to prepare a bouillon, a broth or a soup. The bouillon tablet is normally added to a hot aqueous solution, allowing it to dissolve. In addition, a bouillon tablet may be used when preparing other dishes, as a seasoning product. The dissolution time of bouillon tablets highly depends on its degree of compaction which can be measured / expressed by the hardness of such a product. The reason to compact powders in a regular form presents several advantages for the commercialisation (e.g. reduction of volume, optimisation of packaging material usage, shelf life and convenience). A habit developed by users of bouillon tablets is the crumbling of the tablet or cube into the dish during preparation process either to ensure good distribution and or to accelerate its dissolution time in the cooking water. This crumbliness is one of the attributes that needs to be ensured during shelf life and therefore a post-hardening of the tablet or cube has to be avoided. A minimum hardness is necessary to allow a wrapping of the tablet. A maximum hardness ensures that a normal user can break the tablet within fingers without the use of additional tools or appliances. A typical bouillon tablet or bouillon cube comprises salts, taste enhancing compounds like monosodium glutamate (MSG), sugars, starch or flour, fat, flavouring components, vegetables, meat extracts, spices, colourants etc. The amounts of the respective compounds may vary depending on the specific purpose of the product, the market or taste of the consumer that is aimed at.

A conventional way of manufacturing bouillon tablets comprises mixing powdered bouillon components with fat and pressing the mix into a tablet. In this type of bouillon tablet the fat is the main ingredient holding the structure together.

Nowadays there is a nutritional trend to avoid or at least reduce the consumption of fats rich in saturated fatty acids and to preferably consume oils rich in monounsaturated fatty acids and/or polyunsaturated fatty acids. WO2004/049831 describes how it is possible to have very little solid fat entrapped in a hard bouillon tablet provided the tablet also comprises crystals, a filler and a sticking agent. The sticking agent may comprise ingredients the addition of which (combined with an adequate increase of the water activity) impart a glass transition temperature to the final mixture which may be relatively easily exceeded during tableting. Such ingredients include meat extract, processed flavours, powdered vegetables and maltodextrins.

Sticking agents used to bind together bouillon cubes with low fat contents are typically hygroscopic amorphous ingredients. These are activated in the bouillon mixture by the addition of water. This process of water addition can be problematic, for example it is difficult to ensure homogenous distribution of the water. Crust formation may occur which requires stopping the mixer for cleaning. Sometimes lumps are formed in the mixtures which causes quality defects in the finished pressed tablets.

WO2007/085609 describes adding pre-wetted cereal, vegetable or fruit fibres to a mixture of the bouillon ingredients.

EP2651240 disclose A stock or seasoning cube comprising: ·from 2 wt% to 15 wt% of water, ·NaCl in amount to provide at least a saturated solution, based on the water content, ·Monosodium glutamate in an amount to provide at least a saturated solution, based on the water content, ·Monosaccharide sugars in an amount of at least 25 wt%, based on the weight of the total water content.

Maltodextrins are commonly used as bulking agents in bouillon tablets. However, consumers increasingly wish to buy food products which have familiar ingredients, such as they might find in their own kitchen cupboard. Maltodextrin is not a common ingredient in domestic kitchens and so may be viewed with suspicion by some consumers. Maltodextrins in bouillon tablets may cause undesirable texture evolution over time.

Hence, there is a persisting need in the art to find improved processes for forming bouillon tablets, especially bouillon tablets which use hygroscopic amorphous ingredients rather than fat to bind the ingredients together.

Any reference to prior art documents in this specification is not to be considered an admission that such prior art is widely known or forms part of the common general knowledge in the field. As used in this specification, the words "comprises", "comprising", and similar words, are not to be interpreted in an exclusive or exhaustive sense. In other words, they are intended to mean "including, but not limited to".

### Summary of the invention

An object of the present invention is to improve the state of the art and to provide an improved solution to overcome at least some of the inconveniences described above or at least to provide a useful alternative. The object of the present invention is achieved by the subject matter of the independent claims. The dependent claims further develop the idea of the present invention.

Accordingly, the present invention provides in a first aspect a process for preparing a bouillon tablet, the process comprising; mixing an ingredient composition comprising, by weight of the composition, less than 10% fat, from 30 to 80% crystalline ingredients, from 5 to 35 % hygroscopic amorphous ingredients and from 10 to 25 % humid native starch, the humid native starch comprising between 19 and 21% moisture by weight of the humid native starch; optionally storing the mixture; pressing the ingredient composition into a tablet; and packaging the bouillon tablet; wherein the bouillon tablet is free from maltodextrin and wherein the humid native starch has a water activity of between 0.4 and 0.6 at 20°C and wherein the native starch is selected from the group consisting of native wheat starch, native maize starch, native rice starch, native potato starch, native cassava starch and combinations of these and wherein the hygroscopic amorphous ingredient is selected from the group consisting of yeast extract, vegetable powder, animal extract, bacterial extract, vegetable extract, meat powder, reaction flavour, hydrolysed plant protein and combinations of these.

It has been surprisingly found by the inventors that using humid native starch in a bouillon tablet composition provides an efficient method of incorporating moisture in the bouillon tablet such that the hygroscopic amorphous ingredients can bind the ingredients. Good quality, low solid fat, bouillon tablets can be prepared in the absence of maltodextrin when humid native starch is employed in the recipe and undesirable textural evolution can be avoided.

The use of humid native starch to carry water allows a good distribution of water in the bouillon tablet mixture to activate the hygroscopic amorphous ingredients. The activation of the hygroscopic amorphous ingredients by the humid native starch provides sufficient binding of the bouillon ingredients, for example achieving a minimum hardness of 80N to allow a wrapping of the tablet. Incorporation of water via humid starch is advantageous over direct addition of water which can cause lumps and a crust to form in the bouillon tablet mixture. Humid starch was found to provide a faster moisture transfer than can be achieved by adding water via wetted fibres. Typically a storage period is necessary after the addition of water to ensure sufficient moisture has been transferred to the hygroscopic amorphous ingredients for binding. Such a storage period increases manufacturing costs. Having a faster moisture transfer can avoid the need for a storage period between mixing the ingredients and pressing into a tablet, or at least can reduce the duration of such a storage period. A bouillon mass with water added via humid starch was found to reach an a_{w} equilibrium after 2 hours, compared to the same quantity of starch and water added separately which took 14 hours to reach equilibrium. When the same amount of water was incorporated using wetted carrot fibres the mass had not reached equilibrium after 24 hours.

It was found that commonly used bouillon ingredients such as maltodextrin form solid-solid interactions with crystalline bouillon ingredients such as salt. Surprisingly, these solid-solid interactions do not occur with native starch. The inventors found that replacing maltodextrin with humid native starch decreased undesirable texture changes such as post-hardening.

### Brief Description of the Drawings

Figure 1 shows a comparison of texture measurements of different bouillon recipes after different storage conditions; initial sample, 33%RH for 1 month and 58%RH for one month followed by 10 days at 33%RH: A - maltodextrin, C - humid starch. Error bars show the range of values for the 10 replicates of each measurement.
Figure 2 shows the glass transition temperature (T_{g}) vs water activity (a_{w}) curves of the "hygroscopic amorphous ingredients" used as binders in Example 1. From dark to light the curves relate to yeast extract, celery extract and beef flavour.

### Detailed Description of the invention

Consequently the present invention relates in part to a process for preparing a bouillon tablet, the process comprising; mixing an ingredient composition comprising, by weight of the composition, less than 10 % fat (for example less than 7.5 % fat, for further example less than 5 % fat), from 30 to 80 % crystalline ingredients, from 5 to 35 % hygroscopic amorphous ingredients and from 10 to 25 % humid native starch, the humid native starch comprising between 19 and 21 % moisture by weight of the humid native starch; optionally storing the mixture; pressing the ingredient composition into a tablet; and packaging the bouillon tablet; wherein the bouillon tablet is free from maltodextrin and wherein the humid native starch has a water activity of between 0.4 and 0.6 at 20°C and wherein the native starch is selected from the group consisting of native wheat starch, native maize starch, native rice starch, native potato starch, native cassava starch and combinations of these and wherein the hygroscopic amorphous ingredient is selected from the group consisting of yeast extract, vegetable powder, animal extract, bacterial extract, vegetable extract, meat powder, reaction flavour, hydrolysed plant protein and combinations of these.

"Bouillon tablet" means a tablet obtained by pressing a free flowing bouillon powder into a tablet. The tablet may be any shape that can be formed in a tabletting press; many commercial bouillon tablets are cubes. Bouillon tablets are sometimes referred to as broth tablets, stock tablets or seasoning tablets. In a cube form, they are referred to as bouillon cubes, broth cubes, stock cubes or seasoning cubes.

The crystalline ingredients according to this invention may for example be selected from the group consisting of salt, monosodium glutamate, sugar (for example sucrose), citric acid (for example anhydrous citric acid) and combinations of these. The crystalline ingredients may be salt and/or sugar. The crystalline ingredients may be salt, for example sodium chloride. The ingredient composition used in the process of the invention comprises 30 to 80% (by weight of the composition) crystalline ingredients, for example 35 to 75%, for example 35 to 70%, for example 40 to 65%, for example 45 to 65%, for further example 50 to 65% (by weight of the composition) crystalline ingredients. Salt is preferably sodium chloride, but can also comprise other edible salts capable of imparting or enhancing a salty taste perception, such as potassium chloride. In a further embodiment, the composition comprises salt in an amount in the range of 20 to 58% (by weight of the composition), for example between 30 to 55%, for example between 35 to 50%, for further example between 40 to 50% (by weight of the composition). In a further embodiment, the ingredient composition comprises monosodium glutamate in an amount in the range of 0 to 25% (by weight of the composition), for example between 0 to 20%, for example between 0 to 15%, for example between 0.5 to 25%, for example between 0.5 to 15%, for further example between 5 to 10% (by weight of the composition). In a further embodiment, the composition comprises sugar (for example sucrose) in an amount in the range of 0 to 20% (by weight of the composition), for example between 0 to 15%, for example between 0.5 to 15%, for further example between 2 to 10% (by weight of the composition). In a further embodiment, the composition comprises anhydrous citric acid in an amount in the range of 0 to 5% (by weight of the composition), for example between 0.1 to 3%, for further example between 0.1 to 2% (by weight of the composition).

The term "hygroscopic amorphous ingredients" according to this invention means ingredients that have a glass transition temperature (Tg) between -5°C and 60°C at a water activity (a_{w}) between 0.1 and 0.6, for example a Tg of between 10°C and 45°C at an a_{w} between 0.2 and 0.5, for example a Tg between 10°C and 40°C at an a_{w} between 0.2 and 0.5, for further example a Tg between 10°C and 40°C at an a_{w} between 0.2 and 0.4, for further example a Tg between 10°C and 30°C at an a_{w} between 0.2 and 0.3.

The hygroscopic amorphous ingredients used in the process of this invention are selected from the group consisting of yeast extract, vegetable powder, animal extract, bacterial extract, vegetable extract, meat powder, reaction flavour, hydrolysed plant protein and combinations of these. In an embodiment, the hygroscopic amorphous ingredients are not encapsulated. The term "encapsulation" in the context of the current invention means the formation of a layer to very small particles (below 300 µm to 1000 µm). The ingredient composition according to the invention may comprise 7 to 35 % hygroscopic amorphous ingredients, for example 8 to 35 %, for example 9 to 35 %, for example 10 to 30 %, for example 10 to 25 %, for example 10 to 20 %, for example 5 to 25 %, for further example 5 to 15 % (by weight of the composition). In an embodiment, the hygroscopic amorphous ingredients are selected from the group comprising yeast extract, chicken extract, onion powder, garlic powder, celery root powder, tomato powder, bacterial extract, reaction flavour and combinations of these. A bacterial extract is described within WO2009040150 or WO2010105842. A vegetable extract is described within WO2013092296. Vegetable powder means at least one ingredient of onion powder, garlic powder, tomato powder, celery root powder or a combination thereof. In a further embodiment, the ingredient composition comprises yeast extract in an amount in the range of 0 to 15 % (by weight of the composition), for example between 1 to 15 %, for example between 1 to 10 %, for example between 1 to 7 %, for further example between 2 to 6 % (by weight of the composition). In a further embodiment, the composition comprises vegetable powder in an amount in the range of 0 to 15 % (by weight of the composition), for example between 0.1 to 15 %, for example between 0.1 to 10 %, for example between 1 to 10 %, for further example between 1 to 7 % (by weight of the composition). In a further embodiment, the ingredient composition comprises animal extract in an amount in the range of 0 to 15 % (by weight of the composition), for example between 0.1 to 15 %, for example between 0.1 to 10%, for further example between 0.1 to 5% (by weight of the composition). In a further embodiment, the ingredient composition comprises bacterial extract in an amount in the range of 0 to 15 % (by weight of the composition), for example between 0.1 to 15 %, for example between 0.1 to 10 %, for example between 1 to 10 %, for example between 2 to 8 % (by weight of the composition). In a further embodiment, the ingredient composition comprises vegetable extract in an amount in the range of 0 to 15 % (by weight of the composition), for example between 0.1 to 15 %, for example between 0.1 to 10 %, for example between 0.1 to 5 % (by weight of the composition). In a further embodiment, the ingredient composition comprises meat powder in an amount in the range of 0 to 15 % (by weight of the composition), for example between 0.1 to 15 %, for example between 0.1 to 10 %, for further example between 0.1 to 5 % (by weight of the composition). In a further embodiment, the composition comprises reaction flavour in an amount in the range of 0 to 15 % (by weight of the composition), for example between 0.1 to 15 %, for example between 0.1 to 10 %, for further example between 0.1 to 5 % (by weight of the composition). Reaction flavours may for example be amino acids and reducing sugars which react together on the application of heat via the Maillard reaction. In a further embodiment, the ingredient composition comprises hydrolysed plant protein in an amount in the range of 0 to 15 % (by weight of the composition), for example between 0.1 to 15 %, for example between 0.1 to 10 %, for example between 1 to 10 %, for example between 2 to 8 % (by weight of the composition). In a further embodiment, the ingredient composition comprises chicken extract in an amount in the range of 0 to 5 % (by weight of the composition), for example between 0.5 to 5 %, for further example between 1 to 3 % (by weight of the composition). In a further embodiment, the ingredient composition comprises onion powder in an amount in the range of 0 to 10 % (by weight of the composition), for example between 0.1 to 10 %, for example between 0.1 to 5 %, for further example between 1 to 5 % (by weight of the composition). In a further embodiment, the ingredient composition comprises celery root powder in an amount in the range of 0 to 10 % (by weight of the composition), for example between 0.1 to 10 %, for example between 0.1 to 5 %, for example between 1 to 5 % (by weight of the composition). In a further embodiment, the ingredient composition comprises tomato powder in an amount in the range of 0 to 10 % (by weight of the composition), for example between 0.1 to 10 %, for example between 0.1 to 5 %, for further example between 1 to 5 % (by weight of the composition).

Native starch is typically obtained from cereals and tubers by physical extraction, purification and drying of starch milk. It is distinct from pre-gelatinized starch, modified starch or hydrolysed starch which have been obtained by physically, thermally, enzymatically, or chemically treating native starch to change its properties. The native starch according to the invention may be derived from the group consisting of maize, waxy maize, high amylose maize, wheat, tapioca, potato and combinations of these. The native starch may be selected from the group consisting of native wheat starch, native maize starch, native rice starch, native potato starch, native cassava starch and combinations of these.

The humid native starch used in the process of the invention comprises between 19 and 21 % moisture by weight. The humid native starch has a water activity of between 0.4 and 0.6 at 20 °C, for example between 0.45 and 0.55 at 20 °C, for example around 0.5. Such water contents and water activities are ideal for activating the hygroscopic amorphous ingredients in the ingredient composition and causing them to bind the tablet together. Humid native starch of an appropriate moisture content may be obtained by blending humid and non-humid starches and allowing them to equilibrate. Humid native starches are often available commercially at a lower price than the dry native starch as water needs to be removed from starch in the manufacturing process, humid native starch being effectively a part-finished ingredient.

In an embodiment, the mixture is stored for less than 4 hours, for example less than 2 hours, for example less than 1 hour, for example less than 30 minutes, for further example less than 10 minutes. The mixture may be pressed immediately after mixing, with no storage time. The storage period allows the water from the humid native starch to reach the hygroscopic amorphous ingredients. Humid starch provides a faster moisture transfer than from wetted fibre ingredients. Complete a_{w} equilibrium between the ingredients does not necessarily need to be reached, as long as sufficient hygroscopic amorphous ingredients have been activated to provide good binding.

In the context of the present invention, the term "fat" refers to triglycerides solid at a temperature of 20°C, for example solid at a temperature of 25°C. The term "solid at a temperature of 20°C" means that the fat, stored at this temperature, maintains its shape. Fats and oils are the chief component of animal adipose tissue and many plant seeds. The fat according to this invention may have a solid fat content greater than 2% at 30 °C, for example it may have a solid fat content greater than 5% at a temperature of 30°C. The solid fat content of a fat may for example be measured by pulsed NMR. In an embodiment, the bouillon tablet according to process of the invention comprises less than 1 wt.% glucose syrup, for example it may be free from glucose syrup. The bouillon tablet is free from maltodextrin.

Replacing maltodextrin with humid native starch was found to decrease undesirable texture changes such as post-hardening. Maltodextrin, and to a lesser extent glucose syrup are not a common ingredients in domestic kitchens and so may be viewed with suspicion by some consumers. In this context, glucose syrup and maltodextrin are mixtures of D-glucose units connected in chains of variable length, produced from starch by hydrolysis. Glucose syrups and maltodextrins are classified by DE (dextrose equivalent). Typically maltodextrins have a DE between 3 and 20 while glucose syrups have a DE above 20. In an embodiment, the ingredient composition further comprises oil, for example up to 15 wt.% oil, for further example up to 10 wt.% oil. In the context of the present invention the term "oil" refers to triglycerides which are liquid or pourable at a room temperature of 20°C, for example liquid or pourable at a room temperature of 25°C. The oil may have a solid fat content of less than 10 % at 20 °C, for example less than 5 % at 20 °C, for further example 0 % at 20 °C. The oil may be rich in monounsaturated and polyunsaturated fatty acids.

Nowadays there is a nutritional trend to avoid or at least reduce consumption of fats rich in trans fatty acids and saturated fatty acids and to preferably consume healthy oils rich in polyunsaturated fatty acids. It is advantageous to provide a hard bouillon tablet which only or mainly contains oil that is liquid at ambient temperatures in local conditions and no or only little amounts of solid fat. In an embodiment, the bouillon tablet contains less than 4 wt.% saturated fat, for example less than 2 wt.% saturated fat.

In an embodiment, the ingredient composition further comprises spices, colourants and/or flavouring components.

Disclosed is (not part of the invention) a bouillon tablet obtained, for example obtainable, by the process of the invention. The bouillon tablet may exhibit a microscopic structure whereby bridging linkages are present between amorphous ingredients but wherein crystalline ingredients maintain sharply defined edges. The direct addition of water to bouillon mixtures causes partial dissolution and recrystallization of crystalline ingredients, resulting in uneven edges to the crystals.

Further advantages and features of the present invention are apparent from the figures and non-limiting examples.

### Examples

### Example 1: Preparation of bouillon tablets

The formation and texture evolution of bouillon tablets with different recipes was examined. Bouillon masses were prepared at pilot plant scale with a Lödige ploughshare batch mixer L50 (capacity 5 kg, Gebr. Lödige Maschinenbau GmbH, Germany). Three oil-based bouillon recipes were studied; A with maltodextrin, B with dry native starch and C with humid native starch. See table below.

| | **NaCl** + **Sucrose** | **Maltodextrin DE17-19** | **Native Potato Starch 6% Moisture** | **Native Potato Starch 20% Moisture** | **Binders: Yeast Extract Beef flavour Celery flavour** | **Other ingredients and garnishes** | **Water** | **Chicken fat** |
|---|---|---|---|---|---|---|---|---|
| A (maltodextrin) | 62.6% | 18.6% | | | 7.2% | 8.6% | 0.4% | 2.6% |
| B (dry starch) | 62.6% | | 18.6% | | 7.2% | 8.6% | 0.4% | 2.6% |
| C (humid starch) | 62.6% | | | 18.6% | 7.2% | 9.0% | | 2.6% |

The mixing sequence used for these recipes was the following:
Step 1: NaCl + Sucrose (mix 30s, 200rpm, without chopper)
Step 2: Water (mix 60s, 200rpm, with chopper) (not for recipe C)
Step 3: Add chicken fat (mix 60s, 200 rpm, with chopper)
Step 4: Add binders + other ingredients (e.g. non-hygroscopic amorphous ingredients) + maltodextrin or starch (mix 60s, 200 rpm, chopper 30 sec)
Step 5: Garnishes (Mix 60 s, 100 rpm, without chopper)

The mixed ingredients (the bouillon mass) was pressed using a Röltgen Flexitab tablet press (Röltgen GmbH & Co. KG, Germany). A die with dimensions of 23 x 31 x 60 mm was used. This die is automatically filled with bouillon mass. Filling depth was varied to control the quantity of filled powder and thus the tablet's weight. Tablet height was determined by adjusting the distance the punch is lowered (web height) during main compression. Prior to this main compression, a pre-compression is performed in order to release air from the system. Filling depth (mm) and web height (mm) were adjusted in a way to produce tablets with an average weight of 10 g and height of 10 mm. The applied pressing force mainly results from these settings and typically varies between 3 kN and 40 kN, depending on the recipe. For the performed experiments, a pressing force between 30 and 40 kN was applied.

Hardness of the tablets was measured with a texture analyzer Zwick Z005 and a pressing tool having two parallel surfaces. The breaking force was taken at the maximum of the force measured during the compression test. Each breaking force reported was an average of 10 replicates.

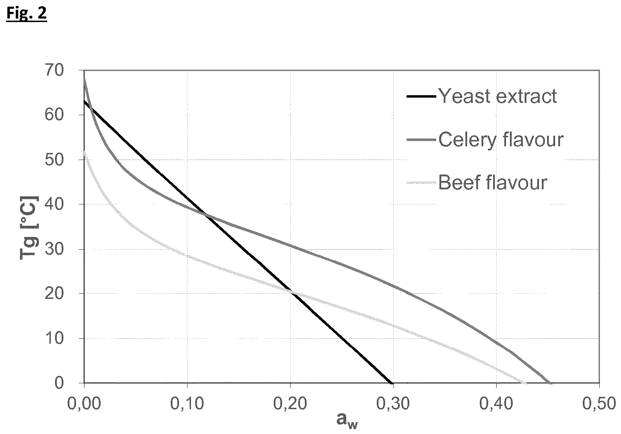

In oil-based recipes such as these, the initial binding is mainly due to hygroscopic amorphous ingredients (called binders). These amorphous ingredients are activated (become sticky) when their glass transition temperature is below the ambient temperature. This activation is caused by water that is added to the bouillon mass or by moisture transfer between ingredients. The hygroscopic amorphous ingredients, yeast extract, beef flavour and celery flavour are activated by an a_{w} = 0.30 (Figure 2).

The initial binding and texture of Recipe A (maltodextrin) was good (breaking force between 200 and 300N) because the a_{w} of the bouillon mass was approximately 0.30. Replacing maltodextrin with dry (6% moisture) native potato starch (Recipe B) was unsuccessful. As the dry starch had an initial aw of approximately 0.10, the resulting a_{w} of the bouillon mass was below 0.30 (approximately 0.20). Therefore, the initial binding was insufficient and the initial tablet hardness was very low (≈ 6N). The production of a high quantity of tablets was very difficult and consequently the texture evolution of these tablets could not be investigated.

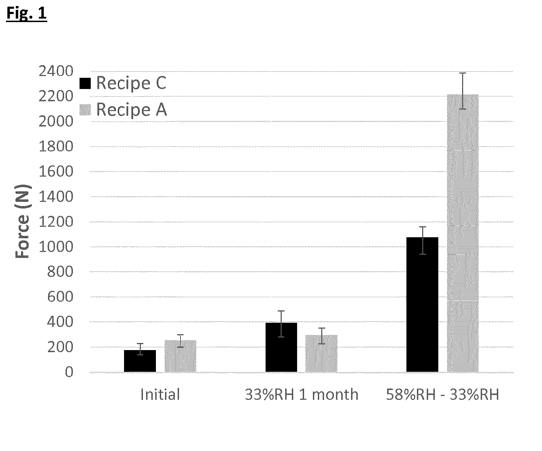

Recipe C uses humid (20% moisture) native potato starch [Roquette] in place of the maltodextrin [Tate & Lyle] of Recipe A. The a_{w} of the resulting bouillon mass was above 0.3 (approximately 0.45) which activated the binders. The initial binding and texture of the tablets were good and several tablets were stored at 33%RH for 1 month. Texture measurements were performed and the data compared to those obtained with the recipe A (Figure 1). Storage of recipe A tablets (maltodextrin) and recipe C tablets (humid starch) at 33%RH for 1 month dries the tablets leading to a small increase in hardness, although for recipe A this increase was not significant.

To simulate the challenging storage conditions that bouillon tablets may experience the tablets were stored for 58%RH for 1 month. It was observed that storage at 58%RH caused the recipe A tablets to become much more sticky than those of recipe C. Stickiness is undesirable as it means the bouillon tablet cannot be crumbled into a food preparation. After the storage at 58%RH, the tablets were stored for 10 days at 33%RH. This treatment led to undesirable post-hardening. Replacing maltodextrin (recipe A) by native potato starch (recipe C) reduced the undesirable post-hardening.

Without wishing to be bound by theory, the inventors believe that amorphous materials above their glass transition interact with crystalline ingredients such as salt. Viscous bridges are formed between the amorphous material and the salt, and when the relative humidity is reduced, the viscous bridges dry and harden the texture of the mixture. DE17-19 maltodextrin is just above its glass transition at 58%RH and 25 °C. In contrast, native starches have very high glass transition temperature and so would remain glassy under these conditions and not form viscous bridges.

It can be seen that the post-hardening effect was not totally inhibited by replacing maltodextrin with starch. Again, without wishing to be bound by theory, the inventors believe that this relates to interactions between the binders (which must be above their glass transition to function) and the crystalline ingredients.

### Example 2: Equilibration time of different bouillon recipes

The water activity of bouillon masses with different recipes was examined. Three oil-based bouillon recipes were studied, i.e. with wetted carrot fibers, with dry native starch (6% moisture) and with humid native starch (20% moisture). The equipment and mixing sequence used for making these recipes was the same as for Example 1, except step 2 (addition of water) was omitted for recipes with wetted carrot fibers and humid native starch. Water activity was monitored using a water activity meter for several hours immediately after production.

A continuous recording was made of water activity against time. The results show that bouillon masses comprising humid native starch reached an a_{w} equilibrium after 2 hours, compared to the same quantity of starch and water added separately which took 14 hours to reach equilibrium. When the same amount of water was incorporated using wetted carrot fibers, the mass had not reached equilibrium after 24 hours.

Using humid native starch to add the moisture resulted in faster moisture transfer and so would avoid the need for a storage period between mixing the ingredients and pressing into a tablet, or at least could reduce the duration of such a storage period. This in turn would reduce manufacturing costs of the bouillon tablets.

## Claims

1. A process for preparing a bouillon tablet, the process comprising;
- mixing an ingredient composition comprising, by weight of the composition, less than 10 % fat, from 30 to 80 % crystalline ingredients, from 5 to 35 % hygroscopic amorphous ingredients and from 10 to 25 % humid native starch, the humid native starch comprising between 19 and 21 % moisture by weight of the humid native starch;
- optionally storing the mixture;
- pressing the ingredient composition into a tablet; and
- packaging the bouillon tablet;
wherein the bouillon tablet is free from maltodextrin and wherein the humid native starch has a water activity of between 0.4 and 0.6 at 20°C and wherein the native starch is selected from the group consisting of native wheat starch, native maize starch, native rice starch, native potato starch, native cassava starch and combinations of these and wherein the hygroscopic amorphous ingredient is selected from the group consisting of yeast extract, vegetable powder, animal extract, bacterial extract, vegetable extract, meat powder, reaction flavour, hydrolysed plant protein and combinations of these.

2. A process according to claim 1 wherein the crystalline ingredient is selected from the group consisting of salt, monosodium glutamate, sugar, citric acid and combinations of these.

3. A process according to any one of claims 1 to 2 wherein the ingredient composition further comprises oil.

4. A process according to any one of claims 1 to 3 wherein the bouillon tablet contains less than 4 wt.% saturated fat.

5. A process according to any one of claims 1 to 4 wherein the ingredient composition further comprises spices, colourants and/or flavouring components.

## Patentansprüche

1. Verfahren zum Herstellen einer Bouillontablette, das Verfahren umfassend;
- Mischen einer Zutatenzusammensetzung, umfassend, bezogen auf das Gewicht der Zusammensetzung, zu weniger als 10 % Fett, zu von 30 bis 80 % kristalline Zutaten, zu von 5 bis 35 % hygroskopische amorphe Zutaten und zu von 10 bis 25 % feuchte native Stärke, die feuchte native Stärke umfassend zu zwischen 19 und 21 % Feuchtigkeit, bezogen auf das Gewicht der feuchten nativen Stärke;
- optionales Aufbewahren der Mischung;
- Pressen der Zutatenzusammensetzung zu einer Tablette; und
- Verpacken der Bouillontablette;
wobei die Bouillontablette frei von Maltodextrin ist und wobei die feuchte native Stärke eine Wasseraktivität zwischen 0,4 und 0,6 bei 20 °C aufweist und wobei die native Stärke aus der Gruppe ausgewählt ist, die aus nativer Weizenstärke, nativer Maisstärke, nativer Reisstärke, nativer Kartoffelstärke, nativer Maniokstärke und Kombinationen davon besteht und wobei die hygroskopische amorphe Zutat aus der Gruppe ausgewählt ist, die aus Hefeextrakt, Pflanzenpulver, Tierextrakt, Bakterienextrakt, Pflanzenextrakt, Fleischpulver, Reaktionsaroma, hydrolysiertem Pflanzenprotein und Kombinationen davon besteht.

2. Verfahren nach Anspruch 1, wobei die kristalline Zutat aus der Gruppe ausgewählt ist, die aus Salz, Mononatriumglutamat, Zucker, Zitronensäure und Kombinationen davon besteht.

3. Verfahren nach einem der Ansprüche 1 bis 2, wobei die Zutatenzusammensetzung ferner Öl umfasst.

4. Verfahren nach einem der Ansprüche 1 bis 3, wobei die Bouillontablette weniger als 4 Gew.-% gesättigtes Fett enthält.

5. Verfahren nach einem der Ansprüche 1 bis 4, wobei die Zutatenzusammensetzung ferner Gewürze, Farbstoffe und/oder Geschmackskomponenten umfasst.

## Revendications

1. Procédé de préparation d'un cube de bouillon, le procédé comprenant ;
- le mélange d'une composition d'ingrédients comprenant, en poids de la composition, moins de 10 % de matières grasses, de 30 à 80 % d'ingrédients cristallins, de 5 à 35 % d'ingrédients amorphes hygroscopiques et de 10 à 25 % d'amidon natif humide, l'amidon natif humide comprenant entre 19 et 21 % d'humidité en poids de l'amidon natif humide ;
- éventuellement, le stockage du mélange ;
- le pressage de la composition d'ingrédients pour en faire un cube ; et
- l'emballage du cube de bouillon ;
dans lequel le cube de bouillon est exempt de maltodextrine et dans lequel l'amidon natif humide a une activité d'eau comprise entre 0,4 et 0,6 à 20 °C et dans lequel l'amidon natif est choisi dans le groupe constitué d'amidon de blé natif, d'amidon de maïs natif, d'amidon de riz natif, d'amidon de pomme de terre natif, d'amidon de manioc natif et des combinaisons de ceux-ci, et dans lequel l'ingrédient amorphe hygroscopique est choisi dans le groupe constitué d'extrait de levure, de poudre végétale, d'extrait animal, d'extrait bactérien, d'extrait végétal, de viande sous forme de poudre, d'arôme de réaction, de protéine végétale hydrolysée et des combinaisons de ceux-ci.

2. Procédé selon la revendication 1, dans lequel l'ingrédient cristallin est choisi dans le groupe constitué de sel, de glutamate monosodique, de sucre, d'acide citrique et des combinaisons de ceux-ci.

3. Procédé selon l'une quelconque des revendications 1 à 2, dans lequel la composition d'ingrédients comprend en outre de l'huile.

4. Procédé selon l'une quelconque des revendications 1 à 3, dans lequel le cube de bouillon contient moins de 4 % en poids de graisses saturées.

5. Procédé selon l'une quelconque des revendications 1 à 4, dans lequel la composition d'ingrédients comprend en outre des épices, des colorants et/ou des composants aromatiques.
